# EUROPÄISCHE PATENTSCHRIFT

(11) **EP 1 083 043 B1**
(45) Veröffentlichungstag und Bekanntmachung des Hinweises auf die Patenterteilung: **15.12.2004**
(21) Anmeldenummer: 99810815.3
(22) Anmeldetag: 10.09.1999
(51) Int. Cl.: B32B 29/06, B65D 65/40, B32B 27/10

(54) **Verpackungsmaterial für Nahrungsmittel**
Packaging material for food products
Matériau d'emballage composite destiné aux produits alimentaires

(43) Veröffentlichungstag der Anmeldung: 14.03.2001
(73) Patentinhaber: Alcan Technology & Management AG, 8212 Neuhausen am Rheinfall (CH)
(72) Erfinder: Marbler, Claude, 57370 Phalsbourg (FR); Parmentier, René, 57400 Buhl (FR)

(56) Entgegenhaltungen:
- EP-A- 0 621 202
- WO-A-91/15410
- DATABASE WPI Section Ch, Week 198748 Derwent Publications Ltd., London, GB; Class A32, AN 1987-337197 XP002131424 & JP 62 240544 A (ASAHI CHEM IND CO LTD), 21. Oktober 1987 (1987-10-21)

## Beschreibung

Vorliegende Erfindung betrifft eine Speiseeisverpackung nach dem Oberbegriff des unabhängigen Anspruchs 1.

Folien bzw. Verbundmaterialien müssen verschiedenste Eigenschaften aufweisen und eine Mehrzahl von Kriterien erfüllen, damit sie als Verpackungsmaterialien für Nahrungsmittel und insbesondere für Glace bzw. Speiseeis geeignet sind. Das Verpackungsmaterial sollte beispielsweise wenigstens einseitig fett- und feuchtigkeitsabweisend sein sowie eine Barrierewirkung gegenüber beispielsweise Wasserdampf oder Luft aufweisen. Als Verpakkungsmaterial für Speiseeis sollte ein Verbundmaterial des weiteren in einem Temperaturbereich von z.B. + 70°C bis - 40°C funktionsfähig und in ihren chemischen und physikalischen Eigenschaften beständig sein.

Bei der Lebensmittelherstellung bzw. beim Abpacken der Lebensmittel kann es vorkommen, dass sowohl die Aussenseite als auch die Innenseite eines Verpackungsmaterials bzw. eines daraus geformten Verpackungsbehälters mit den zu verpackenden Lebensmitteln in Berührung kommt.

So kommt beispielsweise bei der Herstellung von sogenanntem Speiseeis in Spitztüten, auch "Glaces-Cornets" oder "Comets" genannt, das Verpackungsmaterial in der Regel beidseitig mit dem zu verpackenden Lebensmittel in Berührung.

"Glaces-Cornets" sind im wesentlichen mit Speiseeis gefüllte, spitztütenartig geformte Waffeln, d.h. die Waffeln bilden in der Regel eine konische Hohlform zur Aufnahme des Speiseeises aus. Das abgefüllte Speiseeis, in fester Form, überragt in der Regel, in Fortsetzung der durch die Waffel vorgegebenen konischen Form, den obere Waffelrand um ein bestimmtes Mass, beispielsweise um ca. ¼ der Waffelhöhe. Die Waffel und der die Waffel überragende kegelstumpfförmige Speiseeisabschnitt sind von einer ebenfalls konisch geformten Verpackungsmaterial, dem konischen Verpackungsbehälter, eingehüllt, wobei der kreisförmige Rand des konischen Verpackungsbehälters die obere Speiseeisfläche um ein bestimmtes Mass überragt.

Aufgesetzt auf die obere Speiseeisfläche und umgeben vom vorstehenden Rand des konischen Verpackungsbehälters liegt z.B. ein kreisförmiger Deckel. Der kreisförmige Deckel wird insbesondere durch adhäsive Kräfte auf der Speiseeisoberfläche gehalten. Des weiteren kann der obere, vorstehende Randbereich des konischen Verpackungsbehälters plissiert auf den Deckel umgefaltet sein und diesen festhalten.

Zum Öffnen der Verpackung bzw. Packung eines Glaces-Cornet kann das Verpackungsmaterial in der Regel mit Hilfe einer seitlich vorragenden Wegreiss-Lasche spiralförmig abgerissen und der Deckel von der Speiseeisoberfläche abgelöst werden.

Zur Herstellung solcher Verpackungen werden Flächenzuschnitte in der Form ähnlich eines Kreissektors aus dem Verpackungsmaterial geschnitten und zu konischen Verpackungsbehältern geformt, wobei der Flächenzuschnitt im Bereich seiner beiden im wesentlichen geradlinigen Rändern übereinander lappend verklebt wird.

Die konischen Waffeln werden in der Regel vorgefertigt und beispielsweise noch in erwärmtem Zustand bei Temperaturen von bis + 70°C in die konischen Verpackungsbehälter abgefüllt. Aus Platzgründen werden die die Waffeln enthaltenden konischen Verpackungsbehälter ineinander geschoben und gestapelt, so dass in kontinuierlich abwechselnder Folge Behälter, Waffel, Behälter, Waffel, etc. gestapelt sind. Die zur Abfüllung mit Speiseeis vorbereiteten und aufeinander gestapelten Behälter-Waffel-Einheiten werden bis zur Weiterverarbeitung zwischengelagert, z.B. in Kisten. Somit kommt die Verpackungsaussenseite unter Umständen über eine längere Zeitdauer mit der Waffel in direkten Kontakt.

Ein Verpackungsmaterial, beispielsweise für solche Glaces-Cornets, sollte vorteilhaft in Flächenstücke schneidbar bzw. trennbar sein. Die Flächenstücke sollten zweckmässig für die weiteren Verarbeitungsschritte Planheit bewahren und z.B. nicht knittern oder einrollen. Des weiteren sollte das Verpackungsmaterial und insbesondere die zugeschnittenen Flächenstücke umformbar, vorzugsweise zu einer Kegelform bzw. Konus umformbar sein. Das Verpackungsmaterial soll weiters von Hand durch alle Lagen zerreissbar sein, ohne dass z.B. einzelne Folien nennenswert delaminieren und das Aufreissen erschweren.

Die beispielsweise heute für solche Glaces-Cornets verwendeten Verpackungsmaterialen weisen in der Regel einen Aufbau mit einer aussen liegenden Folie aus Aluminium einem dazwischen liegenden Kaschierkleber und einer innen liegenden einseitig kalandierten Papierfolie aus einem Kraftpapier mit einer Flächenmasse von beispielsweise 50 bis 150 g/m² auf. Die aussen liegende Aluminiumfolie ist in der Regel auf ihrer freien Oberfläche bedruckt, insbesondere farbig bedruckt.

Dieses bekannte Verpackungsmaterial weist unter anderem den Nachteil auf, dass die Bedruckung auf der Aluminiumfolie an der Aussenseite des Verpackungsbehälters durch mechanische oder chemische Beanspruchung abgetragen oder beschädigt werden kann. Insbesondere beispielsweise bei der Stapelung von mit Waffel gefüllten konischen Verpackungsbehältern kann durch den Kontakt bzw. Reibung zwischen Waffel und Aussenseite des Verpackungsbehälters die Bedruckung abgenutzt werden, und es können Druckpartikel auf der Waffel abgesetzt werden.

Da die Waffeln des weiteren fetthaltig sind, können die Fettstoffe der Waffeln zusätzlich die Bedruckung angreifen und kleine Mengen von Druckfarbe bzw. der darin enthaltenen Substanzen aufnehmen. Gewisse in Druckfarben enthaltene Stoffe haben jedoch nicht selten negative Auswirkungen auf die Gesundheit, weswegen ein Übertritt solcher Substanzen auf das Nahrungsmittel, auch nur in geringsten Spuren, absolut unerwünscht ist.

Das Aufreissen eines heute für Glaces-Cornets verwenden konischen Verpackungsbehälters wird zudem durch die faserige Struktur des Kraftpapiers erschwert, weshalb der Verpakkungsbehälter oft erst durch mehrmaliges Anreissen des Verpackungsmaterials entfernt werden kann. Des weiteren ist die innen liegende Kraftpapierfolie nicht optimal fett- und feuchtigkeitsabweisend.

Aufgabe vorliegender Erfindung ist ein Verpackungsmaterial, das schneid- und umformbar, kälte- und wärmeresistent, beidseitig fett- und wasserabweisend ist, und das keinen Sauerstoff oder Wasserdampf passieren lässt, und von welchem keine Substanzen der Verpakkungsbedruckung, z.B. während der Herstellung, der Lagerung und des Gebrauchs der Verpackung bzw. Packung, auf die Lebensmittel übergehen können.

Erfindungsgemäss wird die Aufgabe durch den kennzeichnenden Teil des unabhängigen Anspruchs 1 gelöst.

Mit aussen liegender Folie ist die vom Verpackungsinhalt abgewandte gegen aussen weisende Deckfolie und mit innen liegender Folie die dem Verpackungsinhalt zugewandte Deckfolie gemeint. Unter äusserer Seite bzw. Oberfläche einer Folie ist die vom Verpakkungsinhalt abgewandte und mit innerer Seite bzw. Oberfläche einer Folie ist die dem Verpackungsinhalt zugewandte Seite bzw. Oberfläche einer Folie oder Schicht aus einem Verbundmaterial oder aus einer Monofolie zu verstehen.

In besonderer Ausgestaltung der Erfindung ist vorgesehen, dass die aussen liegende Folie oder Schicht aus im sichtbaren Wellenlängenbereich transparentem oder teilweise transparentem Polypropylen (PP), wie gegossenes (cast) PP, axial orientiertes PP, amorphes oder kristallines PP oder Gemische davon, ataktisches und isotaktisches PP oder Gemische davon, Copolymere und Polyblends des PP, und insbesondere aus biaxial-orientiertem Polypropylen ist.

In weiterer Ausgestaltung der Erfindung ist die innen liegende Folie oder Schicht aus Pergament-Papier.

Die aussen liegende Folie oder Schicht weist eine Dicke von 6 bis 25 µm, vorzugsweise von 10 bis 15 µm, und insbesondere von 12 µm, auf.

Die Oberflächen der innen liegenden Folie, d.h. des Pergament-, Pergamin- oder Pergamentersatz-Papiers, können maschinenglatt oder einseitig glatt sein und können satiniert, gekreppt, gefärbt oder ungefärbt sein. Die innen liegende Folie oder Schicht weist eine Flächenmasse von 60 - 110 g/m², vorzugsweise von 75 - 95 g/m², und insbesondere von 85 g/m² auf.

Zwischen der aussen und der innen liegenden Folie oder Schicht können eine oder mehrere weitere Schichten, wie Sperrschichten, und/oder Folien, sog. Zwischenfolien, aus Metall, z.B. aus Eisenmetall, wie Eisen, verzinktes Eisen, Stahl oder aus Nicht-Eisenmetall, wie Messing, Kupfer, Magnesium und seine Legierungen, und insbesondere Aluminium und seine Legierungen, und/oder aus Kunststoff angeordnet sein.

Des weiteren kann eine oder mehrere Folien, insbesondere Zwischenfolien, mit einer Keramikschicht beschichtet sein. Solche Schichten können beispielsweise Verbindungen der Formeln SiOₓ , wobei x eine Zahl von 1 bis 2 ist oder Al₂O₃ sein.

In weiterer zweckmässiger Ausgestaltung der Erfindung ist vorgesehen, dass zwischen der aussen und der innen liegenden Folie oder Schicht eine Schicht aus Metall einer Dicke von 5 bis 30 nm (Nanometer) angeordnet ist. Die Metallschicht kann z.B. aus einem Eisenmetall, wie Eisen, verzinktes Eisen, Stahl oder aus einem Nicht-Eisenmetall, wie Messing, Kupfer, Magnesium und seine Legierungen, und insbesondere aus Aluminium und seinen Legierungen bestehen. Die Metallschicht ist vorteilhaft auf der inneren, dem Verpackungsinhalt zugewandten Seite der aussen liegenden Folie bzw. auf dem auf der inneren Seite der aussen liegenden Folie aufgebrachten Konterdruck aufgebracht.

Die Metallschicht kann beispielsweise durch Gas- oder Dampfphasenabscheidung im Vakuum, (physical vapor deposition, PVD), durch thermische Verdampfung, durch Elektronenstrahlverdampfung, mit und ohne Ionenunterstützung, durch Sputtern, insbesondere durch Magnetronsputtering, durch Plasmapolymerisation oder durch chemische Gasphasenabscheidung (chemical vapor deposition, CVD) mit und ohne Plasmaunterstützung, auf das Trägermaterial bzw. auf die innere, dem Verpackungsinhalt zugewandten Seite der aussen liegenden Folie bzw. auf den Konterdruck aufgebracht sein.

Auf der äusseren, dem Verpackungsinhalt abgewandten Oberfläche der innen liegenden Folie aus Pergament-, Pergamin- oder Pergamentersatz-Papier kann eine Beschichtung, insbesondere eine Extrusionsbeschichtung, aus Polypropylen (PP), aus Polyethylen (PE) oder aus Polyamid (PA) angebracht sein. Geeignete Polypropylene sind z.B. gegossenes (cast) PP, axial orientiertes PP, amorphes oder kristallines PP oder Gemische davon, ataktisches und isotaktisches PP oder Gemische davon, Copolymere und Polyblends des PP, und insbesondere biaxial-orientiertes Polypropylen. Geeignete Polyethylene sind z.B. Polyethylen hoher Dichte (HDPE), Polyethylen mittlerer Dichte (MDPE), und besonders Polyethylen niedriger Dichte (LDPE), sowie lineares Polyethylen mittlerer Dichte (LMDPE) und lineares Polyethylen niedriger Dichte (LLDPE). Geeignete Polyamide sind z.B. Polyamid 6, Polyamid 11, Polyamid 12, Polyamid 6,6, Polyamid 6,10, Polyamid 6,12, Polyamid 6-3-T und Gemische davon.

Die aufgebrachte Schicht verbindet beispielsweise die innen und aussen liegende Folie, welche z.B. eine Metallisierung enthält, bzw. verbindet die innen liegende Folie und eine nachfolgende weitere Zwischenfolie, z.B. eine Metall- oder Kunststoff-Folie, miteinander. Die Schicht ist zweckmässig unmittelbar direkt auf die innen liegende Folie, d.h. auf das Pergament-, Pergamin- oder Pergamentersatz-Papier aufgebracht. Die Schicht weist zweckmässig eine Dicke von 5 bis 15 µm, bevorzugt von 8 bis 12 µm auf.

In möglicher Ausführung der Erfindung besteht die aussen liegende Folie oder Schicht aus einer der vorgenannten und auf die äussere Seite der innen liegende Folie aufgebrachten Schicht. Diese Schicht ist vorteilhaft eine Extrusionsschicht, einer Dicke von 6 bis 25 µm. In dieser Ausführung ist zweckmässig auf der äusseren Seite der innen liegenden Folie ein Druck aufgebracht.

Die innen liegende Folie kann auch über einen Kaschierkleber, welcher z.B. über eine Extrusionskaschierung aufgebracht wird, mit der aussen liegende Folie, welche z.B. eine Metallisierung enthält, oder mit einer nachfolgenden Zwischenfolie, z.B. eine Metall- oder Kunststoff-Folie, verbunden sein.

Der Kaschierkleber ist zweckmässig mit einer Flächenmasse von 1 bis 7 g/m², vorteilhaft von 1 bis 5 g/m² und zweckmässig von rund 3 g/m² aufgetragen. Als Kaschierkleber kommen insbesondere lösungsmittelhaltige oder lösungsmittelfreie oder wasserhaltige Kleber zur Anwendung. Ein lösungsmittelhaltiger Kaschierkleber kann z.B. auf der Basis von Polyurethan (PUR) sein und in einer Flächenmasse von z.B. 3,0 bis 4,0 g/m² aufgetragen sein. Ein lösungsmittelfreier Kaschierkleber kann ebenfalls auf der Basis von PUR und in einer Flächenmasse von z.B. 3,0 bis 4,0 g/m² aufgetragen sein. Ein wasserhaltiger Kaschierkleber kann auf der Basis von Acrylaten und in einer Flächenmasse von 1, 5 bis 2,5 g/m² aufgetragen sein.

Die Folien können zur Verbesserung der Haftung fallweise einer Corona-Entladung, einer Flammenbehandlung, einer Plasmabehandlung oder einer Ozonbehandlung unterzogen werden.

Das erfindungsgemässe Verpackungsmaterial enthält eine Bedruckung oder Konterdruck, welche zweckmässig auf der Aussenseite der Verpackung sichtbar ist. Die Bedruckung ist zweckmässig ein auf der inneren, dem Verpackungsinhalt zugewandten Seite der aussen liegenden Folie angebrachter Konterdruck und/oder ein auf der äusseren, dem Verpackungsinhalt abgewandten Seite einer an die innere Seite der aussen liegenden Folie anschliessenden Folie angebrachter Druck, wobei die beiden Folien gegebenenfalls über eine transparente Zwischenschicht oder -folie aus Kunststoff verbunden sein können und die Zwischenschicht oder -folie zweckmässig eine Extrusionsschicht oder ein Kaschierkleber ist.

Das Bedrucken des Trägermaterials kann mit allen bekannten Druckverfahren vorgenommen werden, so z.B. Buch-, Offset-, Flexo-, Sieb-, Helio-, Tief- oder Hochdruck. Die Wahl, welches Druckverfahren zur Anwendung kommt, hängt von der gewünschten Druckqualität, von den jeweiligen technischen Gegebenheiten, den Materialien und der Auflagenhöhe ab. Bevorzugt ist der Flexodruck (auch Anilin- oder Gummidruck genannt) und der Tiefdruck, wie Kupfertiefdruck, oder der Heliodruck.

Die Bedruckung kann schwarz, weiss, ein- oder mehrfarbig sein. Die Folie wird zweckmässig mit einem Druckmuster bedruckt. Das Druckmuster kann figürliche oder abstrakte graphische Gestaltungen, Zahlen und Buchstaben, Zeichen, Figuren oder andere beliebige Schriften oder Muster beinhalten. Die Bedruckung dient beispielsweise zur Produkteinformationen, zur Werbung oder zur Produkteidentifikation.

In besonderer Ausführung besteht das Verpackungsmaterial aus einem der in nachfolgenden Beispielen beschriebenen Verbundmaterialien, wobei die zuerst aufgeführte Folie jeweils die aussen liegende und die abschliessend aufgeführte Folie jeweils die innen liegende Folie darstellt. Des weiteren kann in den nachfolgendene Beispielen 1 bis 5 an Stelle von Pergament-Papier auch Pergamentersatz- und insbesondere Pergamin-Papier eingesetzt werden.

Die nachfolgenden Beispiele von erfindungsgemässen Verpackungsmaterialien sowie ein Beispiel zur Verwendung des Verpackungsmaterials sind durch Zeichnungen illustriert. Es zeigen:
- Fig. 1a-1e:: einen schematischen Aufbau des erfindungsgemässen Verpackungsmaterials in verschiedenen Ausführungen;
- Fig. 2a:: einen Zuschnitt eines erfindungsgemässen Verpackungsmaterials zur Herstellung einer Spitztüte;
- Fig. 2b:: eine Spitztüte aus einem erfindungsgemässen Verpackungsmaterial zur Aufnahme einer Waffel.

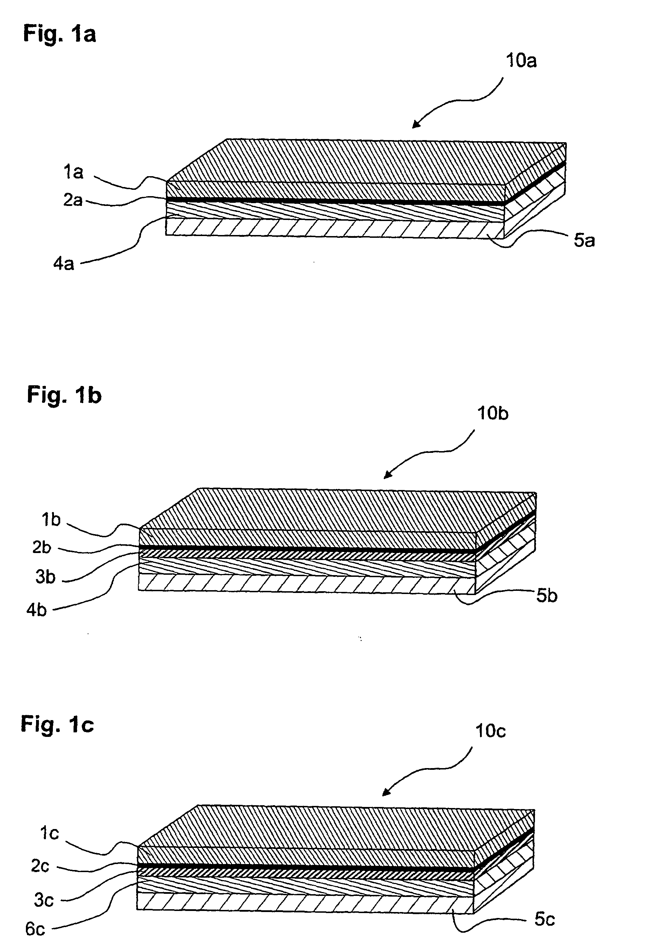

### Beispiel 1 (siehe Fig. 1a):

Verpackungsmaterial 10a mit einer/einem
- Folie 1a aus Polypropylen, vorzugsweise biaxial orientiertem Polypropylen, einer Dicke von 12 µm;
- Druckschicht 2a;
- Kaschierkleber 4a einer Flächenmasse von 3 g/m²;
- Folie 5a aus Pergament-Papier einer Flächenmasse von 85 g/m².

In geänderter Ausführungsform kann die aussen liegende Folie 1a eine Dicke im Bereich von 6 bis 25 µm, der Kaschierkleber 4a eine Flächenmasse von 1 bis 5 g/m² und die innen liegende Folie 5a eine Flächenmasse von 70 bis 100 g/m² aufweisen. Das Verpackungsmaterial 10a weist vorteilhaft an der inneren, dem Verpackungsinhalt zugewandten Seite der aussen liegenden Folie 1a einen Konterdruck 2a auf. In Ausgestaltung der Erfindung kann alternativ oder zusätzlich zum Konterdruck 2a eine Bedruckung auf der äusseren, dem Verpackungsinhalt abgewandten Seite der innen liegenden Pergament-Papier-Folie 5a angebracht sein. Der Kaschierkleber 4a ist vorteilhaft ein lösungsmittelfreier Kleber, vorzugsweise auf der Basis von Polyurethan.

### Beispiel 2 (siehe Fig. 1b):

Verpackungsmaterial 10b mit einer/einem
- Folie 1b aus Polypropylen, vorzugsweise biaxial orientiertem Polypropylen, einer Dicke von 12 µm;
- Druckschicht 2b;
- Metallschicht 3b;
- Kaschierkleber 4b einer Flächenmasse von 3 g/m²;
- Folie 5b aus Pergament-Papier einer Flächenmasse von 85 g/m².

In geänderter Ausführungsform kann die aussen liegende Folie 1b eine Dicke von 6 bis 25 µm, der Kaschierkleber 4b eine Flächenmasse von 1 bis 5 g/m² und die innen liegende Folie 5b eine Flächenmasse von 70 bis 100 g/m² aufweisen. Das Verpackungsmaterial 10b weist vorteilhaft an der inneren dem Verpackungsinhalt zugewandten Seite der aussen liegenden Folie 1b einen Konterdruck 2b auf. Die Metallschicht 3b mit einer Dicke von z.B. 5 bis 30 nm ist über dem Konterdruck 2b aufgebracht. Die Metallschicht 3b ist z.B. aus Aluminium oder seinen Legierungen.

### Beispiel 3 (siehe Fig. 1c):

Verpackungsmaterial 10c mit einer
- Folie 1c aus Polypropylen, vorzugsweise biaxial orientiertem Polypropylen, einer Dicke von 12 µm;
- Druckschicht 2c;
- Metallschicht 3c;
- Extrusionsschicht 6c aus Polypropylen oder Polyethylen, vorzugsweise LDPE, einer Dicke von 10 µm;
- Folie 5c aus Pergament-Papier einer Flächenmasse von 85 g/m².

In geänderter Ausführungsform kann die aussen liegende Folie 1c eine Dicke von 6 bis 25 µm, die Extrusionsschicht 6c eine Dicke von 8 bis 12 µm und die innen liegende Folie 5c eine Flächenmasse von 70 bis 100 g/m² aufweisen. Das Verpackungsmaterial 10c weist vorteilhaft an der inneren dem Verpackungsinhalt zugewandten Seite der aussen liegenden Folie 1c einen Konterdruck 2c auf. Die Metallschicht 3c mit einer Dicke von z.B. 5 bis 30 nm ist über dem Konterdruck 2c aufgebracht. Die Metallschicht 3c ist z.B. aus Aluminium oder seinen Legierungen.

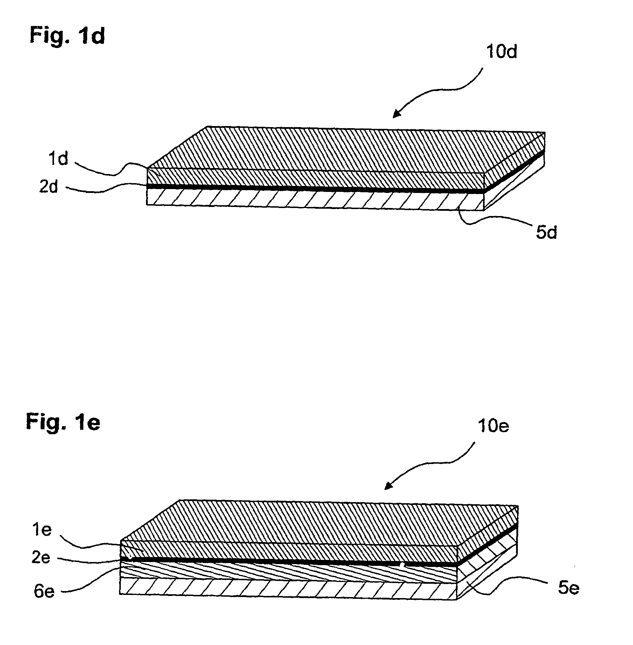

### Beispiel 4 (siehe Fig. 1d):

Verpackungsmaterial 10d mit einer
- Extrusionsschicht 1d aus Polypropylen, vorzugsweise biaxial orientiertem Polypropylen, Polyethylen, vorzugsweise LDPE, oder Polyamid einer Dicke von 12 µm;
- Druckschicht 2d;
- Folie 5d aus Pergament-Papier einer Flächenmasse von 85 g/m².

In geänderter Ausführungsform kann die aussen liegende Extrusionsschicht 1d eine Dicke von 6 bis 25 µm und die innen liegende Folie 5d eine Flächenmasse von 70 bis 100 g/m² aufweisen. Das Verpackungsmaterial 10d weist vorteilhaft an der äusseren, dem Verpakkungsinhalt abgewandten Seite der innen liegenden Folie 5d aus Pergament-Papier einen Druck 2d auf.

### Beispiel 5 (siehe Fig. 1e):

Verpackungsmaterial 10e mit einer
- Folie 1e aus Polypropylen, vorzugsweise biaxial orientiertem Polypropylen, einer Dicke von 12 µm;
- Druckschicht 2e;
- Extrusionsschicht 6e aus Polypropylen oder Polyethylen, vorzugsweise LDPE, einer Dicke von 10 µm;
- Folie 5e aus Pergament-Papier einer Flächenmasse von 85 g/m².

In geänderter Ausführungsform kann die aussen liegende Folie 1e eine Dicke von 6 bis 25 µm, die Extrusionsschicht 6e eine Dicke von 8 bis 12 µm und die innen liegende Folie 5e eine Flächenmasse von 70 bis 100 g/m² aufweisen. Das Verpackungsmaterial 10e weist vorteilhaft an der inneren, dem Verpackungsinhalt zugewandten Seite der aussen liegenden Folie 1e einen Konterdruck 2e auf. In Ausgestaltung der Erfindung kann alternativ oder zusätzlich zum Konterdruck 2e eine Bedruckung auf der äusseren, dem Verpackungsinhalt abgewandteh Seite der innen liegenden Pergament-Papier-Folie 5e angebracht sein.

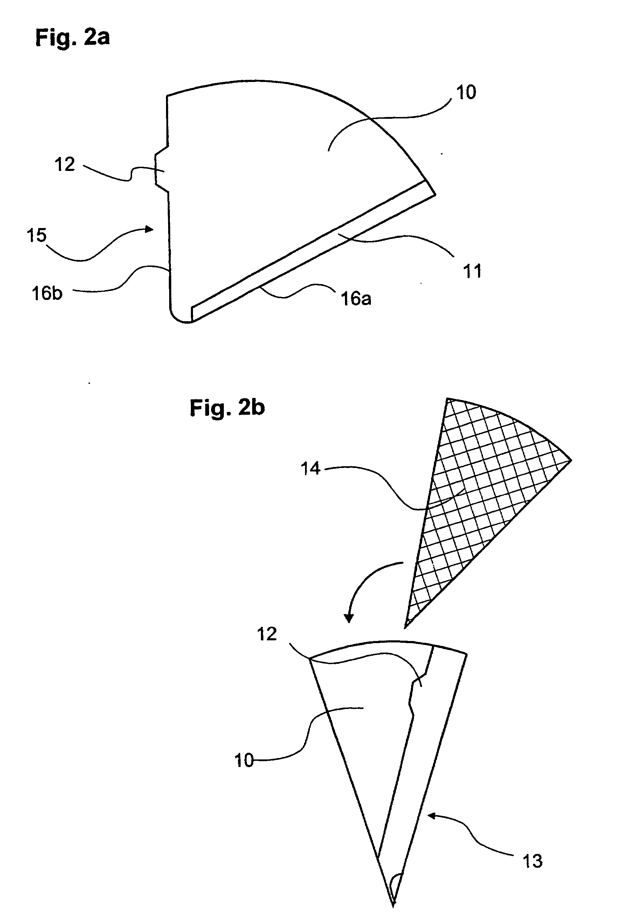

Das Verpackungsmaterial 10 wird bevorzugt als Verpackung für Spitztüten 13 für Speiseeis verwendet (Fig. 2a und 2b). Speiseeis in Spitztüten wird auch Glaces-Cornets genannt. Ein zu einem konischen Verpackungsbehälter 13, d.h. Spitztüte, geformter, in etwa kreissektorförmiger Flächenzuschnitt 15 weist einen im wesentlichen durch die ersten und zweiten Zuschnittsränder 16a, 16b begrenzten und entlang diesen verlaufenden Überlappungsbereich auf. Die einander anliegenden Folienoberflächen sind innerhalb einer vorbestimmten Überlappungsfläche 11 teil- oder vollflächig gegenseitig verklebt. Die Verklebung erfolgt über eine Beschichtung der Oberflächen mit einem Klebstoff z.B. mit einem Schmelzkleber bzw. Hotmelt oder einem anderen geeigneten Klebstoff, wie auch Lack, Klebeband und dergl. Die Spitztüte 13 nimmt die Waffel 14 auf.

Der konische Verpackungsbehälter bzw. die Spitztüte 13 weist an dem zweiten Zuschnittsrand 16b, eine als lokale, flächige Fortsetzung ausgebildete Abreiss- oder Aufreisslasche 12 auf. Diese dient als Reisshilfe zum Entfernen bzw. Abschälen der Spitztüte 13 durch (spiralförmiges) Abreissen des Verpackungsmaterials. Die Abreisslasche 12 kann beispielsweise seitliche Einreisskerben bzw. Einreisshilfen aufweisen, welche das Anreissen der Folie erleichtern (nicht gezeigt).

Neben Spitztüten 13 kann das vorliegende Verpackungsmaterial auch für Formen von Speiseeis mit Waffeln eingesetzt werden, die von der Spitztüten-Form abweichen oder verschieden sind. Des weiteren kann das vorliegende Verpackungsmaterial auch für Nahrungsmittel allgemein verwendet werden, welche eine Waffel oder dergl. als essbares Behältnis für eine Füllung eines weiteren Nahrungsmittels beinhalten und dessen Verpackung bzw. Packung nach dem gleichen oder einem ähnlichen Herstellungsverfahren produziert wird.

Vorteile des vorliegenden erfindungsgemässen Verpackungsmaterials, insbesondere für Glaces-Cornets, liegen unter anderem darin, dass diese ohne Metallfolie hergestellt werden kann. Die Bedruckung ist des weiteren durch eine aussen liegende Folie vor mechanischen oder chemischen Einflüssen der Lebensmittel geschützt. Die Waffeln und das Speiseeis kommen nicht mit Druckfarben in Berührung, d.h. sie können nicht mit Substanzen der Druckfarben kontaminiert werden. Das Verpackungsmaterial ist zudem beidseitig Wasser, Wasserdampf und Sauerstoff undurchlässig sowie fettabweisend. Des weiteren weist vorliegendes Verpackungsmaterial und insbesondere deren Flächenzuschnitte eine ausgezeichnete Planheit auf. Die Flächenzuschnitte lassen sich überdies mechanisch, aber auch von Hand, sicher und schnell von einem Stapel vereinzeln, d.h. sie haften nicht durch Kohäsionskräfte aneinander. Zudem weist das zu einem konischen Verpackungsbehälter umgeformte Verpackungsmaterial eine vorzügliche Formstabilität auf. Im weiteren erfüllt vorliegendes Verpackungsmaterial alle in der Beschreibungseinleitung genannten Erfordernisse, die zur Eignung als Verpackungsfolie für Lebensmittel notwendig sind.

## Patentansprüche

1. Speiseeisverpackung für Glaces-Cornet in Spitztüten aus einem Verbundmaterial, enthaltend eine Kunststoff-Folie oder -Schicht, eine Papierfolie oder -schicht und eine Bedruckung,
**dadurch gekennzeichnet, dass**
das Verbundmaterial eine im sichtbaren Wellenlängenbereich wenigstens teilweise transparente, aussen liegende, vom Verpackungsinhalt abgewandte und gegen aussen weisende Folie oder Schicht (1a) aus Polypropylen (PP), Polyethylen (PE) oder Polyamid (PA)einer Dicke von 6 bis 25 µm und eine innen liegende, dem Verpackungsinhalt zugewandte Folie oder Schicht (5a) aus Pergament-, Pergamin- oder Pergamentersatz-Papier mit einem Flächengewicht von 60 bis 110 g/m² enthält, und auf der inneren, dem Verpackungsinhalt zugewandten Seite der aussen liegenden Folie (1a) ein Konterdruck (2a) und/oder auf der äusseren, dem Verpackungsinhalt abgewandten Seite einer an die innere Seite der aussen liegenden Folie (1a) anschliessenden Folie (5a) ein Druck angebracht ist, welcher auf der Aussenseite der Verpackung sichtbar ist.

2. Speiseeisverpackung nach Anspruch 1, **dadurch gekennzeichnet, dass** die aussen liegende Folie oder Schicht (1a) eine Folie aus Polypropylen (PP), bevorzugt aus biaxial orientiertem Polypropylen (boPP) ist.

3. Speiseeisverpackung nach Anspruch 1, **dadurch gekennzeichnet, dass** die aussen liegende Folie oder Schicht (1a) eine Dicke von 10 bis 15 µm, und insbesondere von 12 µm, aufweist.

4. Speiseeisverpackung nach Anspruch 1, **dadurch gekennzeichnet, dass** die innen liegende Folie oder Schicht (5a) eine Folie aus Pergament-Papier ist.

5. Speiseeiverpackung nach Anspruch 1, **dadurch gekennzeichnet, dass** die innen liegende Folie oder Schicht (5a) eine Flächenmasse von 75 bis 95 g/m²; und insbesondere von 85 g/m², aufweist.

6. Speiseeisverpackung nach Anspruch 1, **dadurch gekennzeichnet, dass** auf der inneren, dem Verpackungsinhalt zugewandten Seite der aussen liegenden Folie (1a) ein Konterdruck (2a) und/oder auf der äusseren, dem Verpackungsinhalt abgewandten Seite einer an die innere Seite der aussen liegenden Folie (1a) anschliessenden Folie (5a) ein Druck angebracht ist, wobei die beiden Folien (1a, 5a) vorteilhaft über eine transparente Zwischenschicht (4a) aus Kunststoff verbunden sind und die Zwischenschicht (4a) vorteilhaft ein Kaschierkleber oder eine Extrusionsschicht ist.

7. Speiseeisvenpackung nach Anspruch 6, **dadurch gekennzeichnet, dass** auf der inneren, einen Konterdruck (2c) enthaltenden Seite der aussen liegenden Folie (1c) eine Metallschicht (3c), vorzugsweise aus Aluminium oder seinen Legierungen, einer Dicke von 5 bis 30 nm aufgebracht ist.

8. Speiseeisverpackung nach Anspruch 6, **dadurch gekennzeichnet, dass** die äussere, dem Verpackungsinhalt abgewandte und eine Bedruckung enthaltende Seite der innen liegenden Folie (5c) eine Extrusionsbeschichtung (6c) aus Polypropylen (PP) oder Polyethylen (PE) aufweist.

9. Speiseeisverpackung nach Anspruch 1, **dadurch gekennzeichnet, dass** die aussen liegende Folie oder Schicht (1d) eine auf die äussere dem Verpakkungsinhalt abgewandten Seite der innen liegenden Folie aufgebrachte Schicht, insbesondere Extrusionsschicht, aus Polypropylen (PP), Polyethylen (PE) oder Polyamid (PA) ist und die äussere dem Verpackungsinhalt abgewandte Seite der innen liegenden Folie (5d) eine Bedruckung (2d) aufweist.

10. Speiseeisverpackung nach Anspruch 1, **dadurch gekennzeichnet, dass** die aussen liegende Folie (1e) mit der innen liegenden Folie (5e) über eine Folie oder Schicht (6e), insbesondere eine Extrusionsschicht, aus Polypropylen (PP), Polyethylen (PE) oder Polyamid (PA) verbunden ist.

11. Speiseeisverpackung nach Anspruch 1, **dadurch gekennzeichnet, dass** die aussen liegende Folie (1a) mit der innen liegenden Folie (5a) über einen Kaschierkleber (4a) verbunden ist.

## Claims

1. Ice-cream packaging for ice-cream comets consisting of a composite material comprising a plastic film or layer, a paper film or layer and printing, **characterised in that** the composite material comprises an outer film or layer (1a) of polypropylene (PP), polyethylene (PE) or polyamide (PA) having a thickness of 6 to 25 µm directed away from the contents of the packaging and towards the outside and at least partially transparent in the visible wavelength region and an inner film or layer (5a) of parchment, glassine or imitation parchment paper having a weight per unit area of 60 to 110 g/m² directed towards the contents of the packaging, and reverse printing (2a) is applied to the inside of the outer film (1a) directed towards the contents of the packaging and/or printing is applied to the outside of a film (5a) connected to the inside of the outer film (1a) directed away from the contents of the packaging and is visible on the outside of the packaging.

2. Ice-cream packaging according to claim 1, **characterised in that** the outer film or layer (1a) is a film of polypropylene (PP), preferably biaxially oriented polypropylene (boPP).

3. Ice-cream packaging according to claim 1, **characterised in that** the outer film or layer (1a) has a thickness of 10 to 15 µm, in particular 12 µm.

4. Ice-cream packaging according to claim 1, **characterised in that** the inner film or layer (5a) is a film of parchment paper.

5. Ice-cream packaging according to claim 1, **characterised in that** the inner film or layer (5a) has a weight per unit area of 75 to 95 g/m², in particular 85 g/m².

6. Ice-cream packaging according to claim 1, **characterised in that** reverse printing (2a) is applied to the inside of the outer film (1a) directed towards the contents of the packaging and/or printing is applied to the outside of a film (5a) connected to the inside of the outer film (1a) directed away from the contents of the packaging, the two films (la, 5a) being joined together by means of a transparent intermediate layer (4a) of plastic and the intermediate layer (4a) advantageously being a laminating adhesive or an extrusion layer.

7. Ice-cream packaging according to claim 6, **characterised in that** a metal layer (3c), preferably of aluminium or its alloys and having a thickness of 5 to 30 nm is applied to the inside of the outer film (1c) comprising reverse printing (2c).

8. Ice-cream packaging according to claim 6, **characterised in that** the outside of the inner film (5c) directed away from the contents of the packaging and comprising printing has an extrusion coating (6c) of polypropylene (PP) or polyethylene (PE).

9. Ice-cream packaging according to claim 1, **characterised in that** the outer film or layer (1d) has a layer, in particular an extrusion layer, of polypropylene (PP), polyethylene (PE) or polyamide (PA) applied to the outside of the inner film directed away from the contents of the packaging and the outside of the inner film (5d) directed away from the contents of the packaging is provided with printing (2d).

10. Ice-cream packaging according to claim 1, **characterised in that** the outer film (1e) is joined to the inner film (5e) by means of a film or layer (6e), in particular an extrusion layer, of polypropylene (PP), polyethylene (PE) or polyamide (PA).

11. Ice-cream packaging according to claim 1, **characterised in that** the outer film (1a) is joined to the inner film (5a) by means of a laminating adhesive (4a).

## Revendications

1. Emballage de glace alimentaire pour des glaces en forme de cornet dans des pochettes pointues en matériau composite, comportant une feuille ou une couche en matière plastique, une feuille ou une couche en papier et une impression,
**caractérisé en ce que**
le matériau composite comprend une feuille ou une couche (1a) au moins partiellement transparente dans le domaine spectral visible, située à l'extérieur, détournée du contenu de l'emballage et dirigée vers l'extérieur et constituée en polypropylène (PP), polyéthylène (PE) ou polyamide (PA) d'une épaisseur de 6 à 25 µm, et une feuille ou une couche (5a) située à l'intérieur, tournée vers le contenu de l'emballage et constituée en papier parchemin, papier cristal ou imitation parchemin d'un poids surfacique de 60 à 110 g/m², et sur le côté intérieur, tourné vers le contenu de l'emballage, de la feuille extérieure (1a) est apposée une contre-épreuve (2a) et/ou sur le côté extérieur, détourné du contenu d'emballage, d'une feuille (5a) se raccordant au côté intérieur de la feuille extérieure (1a) est apposée une impression qui est visible sur le côté extérieur de l'emballage.

2. Emballage de glace alimentaire selon la revendication 1, **caractérisé en ce que** la feuille ou la couche extérieure (1a) est une feuille en polypropylène (PP), de préférence en polypropylène à orientation bi-axiale (boPP).

3. Emballage de glace alimentaire selon la revendication 1, **caractérisé en ce que** la feuille ou la couche extérieure (1a) présente une épaisseur de 10 à 15 µm et en particulier de 12 µm.

4. Emballage de glace alimentaire selon la revendication 1, **caractérisé en ce que** la feuille ou la couche intérieure (5a) est une feuille en papier parchemin.

5. Emballage de glace alimentaire selon la revendication 1, **caractérisé en ce que** la feuille ou la couche intérieure (5a) présente une masse surfacique de 75 à 95 g/m² et en particulier de 85 g/m².

6. Emballage de glace alimentaire selon la revendication 1, **caractérisé en ce que** sur le côté intérieur, tourné vers le contenu de l'emballage, de la feuille extérieure (1a) est apposée une contre-épreuve (2a) et/ou sur le côté extérieur, détourné du contenu de l'emballage, d'une feuille (5a) se raccordant au côté intérieur de la feuille extérieure (1a) est apposée une impression, les deux feuilles (la, 5a) étant reliées via une couche intermédiaire transparente (4a) en matière plastique et la couche intermédiaire (4a) est avantageusement une colle de revêtement ou une couche d'extrusion.

7. Emballage de glace alimentaire selon la revendication 6, **caractérisé en ce que** sur le côté intérieur, présentant une contre-épreuve (2c), de la feuille extérieure (1c) est apposée une couche métallique (3c), de préférence en aluminium ou en ses alliages, d'une épaisseur de 5 à 30 nm.

8. Emballage de glace alimentaire selon la revendication 6, **caractérisé en ce que** le côté extérieur, détourné du contenu d'emballage et présentant une impression, de la feuille intérieure (5c) présente un revêtement d'extrusion (6c) en polypropylène (PP) ou en polyéthylène (PE).

9. Emballage de glace alimentaire selon la revendication 1, **caractérisé en ce que** la feuille ou la couche extérieure (1d) comprend une couche, en particulier une couche d'extrusion apposée sur le côté extérieur, détourné du contenu d'emballage, de la feuille intérieure et constituée en polypropylène (PP), polyéthylène (PE) ou polyamide (PA), et **en ce que** le côté extérieur, détourné du contenu d'emballage, de la feuille intérieure (5d) présente une impression (2d).

10. Emballage de glace alimentaire selon la revendication 1, **caractérisé en ce que** la feuille extérieure (1e) est reliée à la feuille intérieure (5e) via une feuille ou une couche (6e), en particulier une couche d'extrusion, en polypropylène (PP), polyéthylène (PE) ou polyamide (PA).

11. Emballage de glace alimentaire selon la revendication 1, **caractérisé en ce que** la feuille extérieure (1a) est reliée à la feuille intérieure (5a) par une colle de revêtement (4a).
